# EUROPEAN PATENT SPECIFICATION

(11) **EP 1 915 796 B1**
(45) Date of publication and mention of the grant of the patent: **31.03.2010**
(21) Application number: 06769391.1
(22) Date of filing: 11.07.2006
(51) Int. Cl.: H01M 8/16, H01M 8/22, H01M 8/10, H01M 8/04

(54) **BIOLOGICAL FUEL CELL**
BIOLOGISCHE BRENNSTOFFZELLE
PILE À COMBUSTIBLE BIOLOGIQUE

(30) Priority: 15.07.2005 NL 1029544
(43) Date of publication of application: 30.04.2008
(73) Proprietor: MAGNETO SPECIAL ANODES B.V., 3125 BA Schiedam (NL)
(72) Inventor: WESSLING, Matthias, NL-7531 EK Enschede (NL); NYMEIJER, Dorothea, Catharina, NL-7558 MS Hengelo (NL); METZ, Sybrandus, Jacob, NL-8447 DV Heerenveen (NL); NIJKAMP, Jorg, Bernard, Christiaan, NL-7558 WE Hengelo (NL)
(74) Representative: Bruin, Cornelis Willem
(86) International application number: PCT/NL2006/000352
(87) International publication number: WO 2007/011206

(56) References cited:
- WO-A-01/04061
- WO-A-2004/004036
- US-B1- 6 294 281
- HABERMANN W ET AL: "BIOLOGICAL FUEL CELLS WITH SULPHIDE STORAGE CAPACITY" 1991, APPLIED MICROBIOLOGY AND BIOTECHNOLOGY, SPRINGER VERLAG, BERLIN, DE, PAGE(S) 128-133 , XP000862908 ISSN: 0175-7598 page 128 - page 132 figure 5

## Description

The present invention according to a first aspect relates to a biological fuel cell.

According to a further aspect the invention relates to a method for performing a biological oxidation process, using the biological fuel cell in accordance with the invention.

A biological fuel cell is, amongst others, known from the international patent application WO 2004/004036. In the biological fuel cell described therein, in an anode compartment an organic compound together with water is microbially converted under anaerobic conditions to carbon dioxide, electrons and protons. The microorganisms used are capable of using the anode as an electron acceptor. In a cathode compartment a reducible compound (electron acceptor) together with water is reduced by electrons elaborated from the cathode placed therein. Because the anode and cathode are electrically connected, electron transport takes place between the anode and the cathode due to these reactions, which thus create an electric current. The charge balance is maintained because transport of protons is possible via a proton conducting material, which separates the anode compartment and the cathode compartment. The fuel cell described comprises a number of rows of cathode and anode compartments facing each other. These compartments are separated by means of an electrically isolating porous material.

An alternative bio-electric process is described in WO 2005/005981. In this process electric energy is invested to make it possible to transfer electrons to protons at the cathode, and thus generate hydrogen gas. The fuel cell described comprises an anode compartment and an adjoining cathode compartment, separated by means of a proton conducting material.

A drawback of the biological fuel cells described is that they have a small contact area between the anode compartment and the cathode compartment. Due to this, mass transport (in particular of protons) between both compartments is not optimal. Also the total membrane area per reactor volume unit is small. When a membrane electrode assemblage (MEA) is used, wherein the cathode, the proton-conducting separation membrane and optionally a catalyst for the reduction reaction at the cathode, for instance for converting oxygen to water, are combined, the area of the MEA will also be limited. This limits the electrical output of the biological fuel cell.

The present invention is aimed at providing a biological fuel cell with an improved configuration of the anode compartment and the cathode compartment, whereby the above mentioned drawbacks from the state of the art are circumvented.

It has now been found that a biological fuel cell with an improved configuration of the anode compartment and the cathode compartment can be obtained by configuring the anode- and cathode compartment in such a way, so that a compartment of the one kind encloses a number of compartments of the other kind. The invention therefore relates to a biological fuel cell with the characterising feature of claim 1.

The anode compartment may be manufactured from each material suitable for holding a fermentation fluid. In order to prevent inhibition of microbial growth the materials, which directly come into contact with the microorganisms or the growth medium wherein these are present, should preferably be as much as practically possible free from compounds which have a negative influence on the growth and/or the metabolism of these microorganisms. The selection of appropriate materials are within the knowledge of the skilled person.

The selection of the material for the cathode compartment is also within the knowledge of the skilled person. In one embodiment a aqueous medium is present in the cathode compartment. In such embodiments the cathode compartment should be sufficiently fluid tight. In other embodiments however, a gaseous medium is present in the cathode compartment, in such embodiment the cathode compartment should be sufficiently gas tight.

For the manufacture of the electrodes (cathode and anode) conventional materials, which are generally applied within biological fuel cells, may be used. It should be understood that the electrodes should comprise an electron conducting material. It is preferred when the electrodes have a three-dimensional structure, for instance in the form of a porous structure or a film, such that a large electrode area is available. Preferably one or more electrodes are manufactured from carbon, such as in the form of graphite. Application of active cole is also especially suitable for use in, in particular the anode, as this makes a large biologically active electrode-area available for a relatively low cost price.

It is also preferred if the electrode in the cathode compartment is provided with a catalyst, which enhances the transfer of electrons to a reducible compound (electron acceptor), such as protons or molecular oxygen (O₂). Such a catalyst can for instance be Pt on graphite provided in the form of finely divided particles. Suitable materials for use as electron transfer catalysts are noble metals, such as platinum or gold.

Finely divided platinum or gold particles on graphite are in particular suitable as catalyst. The separation between the cathode- and anode compartment is formed by an electrically isolating partition wall. The partition wall can be manufactured from materials suitable for this purpose, which are well known within the art of bio-electro chemistry. For instance the partition wall can consist of an ion-selective material, such as a material that selectively passes anions, or cations (for instance a material allowing protons to pass), such as Nafion^{®}. Examples of suitable materials are furthermore given in WO 01/04061, WO 03/069713 and EP 827229. Also a diaphragm of sintered glass or a sintered ceramic material such as porcelain can be used.

The separation between the cathode- and anode compartment can also be formed by a membrane electrode assemblage (MEA). In such a membrane electrode assemblage the partition wall is combined with the cathode and optionally an electron transfer catalyst, as mentioned above. MEA's are known within the art of the bio-electro chemistry.

In the biological fuel cell according to the invention a number of cathode compartments is enclosed by a number of anode compartments or visa versa. It should be understood that with a number, one or more is meant in this description of the present invention. As the partition wall, optionally in connection with the cathode and possibly an electron transfer catalyst, is situated between the cathode- and anode compartment, this partition wall is also at least partially enclosed by the enclosing compartment. Besides that the partition wall in turn will at least partially enclose the enclosed compartment. Thus, there is a relatively large contact area between the medium in the anode- and cathode compartments and the partition wall. This results in an improved mass between these compartments in comparison to the biological fuel cells from the state of the art. Furthermore the area of the partition wall, relative to the volume of the compartment which it encloses, can be relatively large. This will in general increase the electrical output of the biological fuel cell.

In one embodiment a number of anode compartments encloses a number of cathode compartments. This has a number of benefits, when the reaction at the anode is the limiting reaction of the bio-electro chemical reactions taking place. In such a case, it is preferred to have an anode area, and in connection therewith a volume of the anode compartments, which is relatively large relative to the cathode area (and the volume of the cathode compartment). Besides that, the area of the partition wall should not be unnecessarily large, especially when it comprises an ion-selective membrane, such as Nafion^{®} or a noble metal catalyst, as these are valuable materials. The combination of a relatively large anode area and limited dimensions of the partition wall is most optimally obtained by having an anode compartment enclosing a cathode compartment.

In the invention however also provides a biological fuel cell, wherein a number of cathode compartments enclose a number of anode compartments. This can have benefits in situations where the cathode compartment should be relatively large relative to the anode compartment, and a relatively large area of the partition wall is necessary or does not have any detrimental aspects.

According to the invention of the biological fuel cell a number of enclosed compartments is enclosed by a single enclosing compartment. Thereby a number of enclosed compartments are scattered within the volume of the enclosing compartment. Because the partition wall separates the anode compartment and the cathode compartment, the partition wall is also scattered across the volume of the enclosing compartment. This results in a better distribution of the interfaces between the anode- and cathode compartments, whereby a better mass transport is possible between the compartments. Thereby the total area of the partition wall relative to the total volume of the enclosed compartments, but also relative to the total volume of the enclosing compartment, can also be increased. This in general increases the electrical output of the biological fuel cell.

This also provides a greater number of permutations in the reactor-design of the biological fuel cell according to the invention. In such an embodiment it is possible to vary the number of enclosed compartments depending on the design requirements. In this embodiment it is also possible to shut off a number of enclosed compartments of a constructed biological fuel cell, whereby the reaction volume, or area of the enclosed compartments, may be varied. Shutting off of enclosed compartments may be achieved by preventing reaction medium to flow through such a compartment, for instance with the aid of a closing means, such as a valve.

According to a further preferred embodiment, at least one of the cathode- or anode compartments has a cross section with an essentially circular shape. The three-dimensional form of such a compartment will essentially be cylindrical. In a compartment with such a cross section, a fluidum in general will have good flowing characteristics.

The invention further provides embodiments of the biological fuel cell, wherein at least one of the anode- or cathode compartments have a cross section with a different shape, such as a triangular, a square or a star-shape. Also when the cross section of a compartment has a shape different then a circular shape, it is preferred that the compartment has an elongated (tubular) form.

According to a preferred embodiment at least one of the anode or cathode comprises two materials with a differing electrical resistance. The skilled person will understand that when two materials have a mutually differing electrical resistance, one of the materials will have a lower electrical resistance (larger electrical conductivity) than the other. The material with the lower electrical resistance can act as a current conductor (current collector). When the current conductor is electrically connected with the electrical circuit, through which the anode and cathode are connected, the electrical current, which goes from the anode to the cathode, will preferentially, due to the lower electrical resistance, go through the current conductor. Due to this the electrical resistance through the electrode (anode and/or cathode) wherein the current conductor is placed will be lowered.

The current conductor can be manufactured from any suitable electrically conducting material known to the skilled person. It is only of importance that the electrically conducting material essentially has a lower electrical resistance than the bulk of the electrode material. Furthermore it is preferred that the material of the current collector does not negatively influence microbial growth. Examples of suitable materials are graphite or platinum.

The current conductor preferably has such a configuration and is placed in an electrode (anode and/or cathode), such that the electrical resistance through the electrode is minimized. For example, graphite rods or platinum threads can be braided in the electrode material.

The invention furthermore relates to a method for performing a biological oxidation reaction in accordance to claim 6. In this method use is made of the biological fuel cell in accordance with the present invention.

In the biological fuel cell an electron current can be generated between the anode and cathode, when these are electrically connected. This displacement of electrons is the result of the bio-electro chemical reactions taking place at the anode and cathode. During this, at the anode a biologically oxidizable compound (an electron.donor) together with water is by means of a microbial conversion oxidized to CO₂ and protons, whereby electrons are elicited. The elicited electrons are passed to the anode as and electron acceptor. The reaction at the anode takes place under anaerobic (oxygen free) conditions, as in the presence of oxygen electrons are preferentially passed to oxygen in stead of the cathode. The biologically oxidizable compound can be an organic compound or a mixture of organic compound, and can for instance form part of a waste water stream. Examples of organic compounds, which may act as biologically oxidizable compounds, comprise sugars, organic acids, proteins, etc..

At the cathode a reducible compound (electron acceptor) accepts electrons from the cathode, which act as an electron donor. The reducible compound is preferably molecular oxygen (O₂) as this can simply be supplied by means of aeration of the cathode compartment. Alternative reducible compounds are for example Fe³⁺ ions, both in free form and in complex, for instance in the form of iron(III)cyanide. Protons may also function as electron acceptors at the cathode while forming hydrogen gas. For this it is necessary that the potential difference between the anode and cathode is large enough for the electron, elicited at the cathode, to be transferred to protons for the formation of hydrogen gas. For this it may be essential to apply a potential across the anode and cathode.

The reactions at the anode and at the cathode may be presented as follows:
When O₂ is used as electron acceptor:

| | |
|---|---|
| Anode: [CH₂O] + H₂O | -> CO₂ + 4H⁺ + 4e⁻ (oxidation) |
| Cathode: O₂ + 4H⁺ + 4e⁻ | -> 2H₂O (reduction) |
| | |
| | |
| Nett: [CH₂O] + O₂ | -> CO₂ + H₂O |

When H⁺ is used as electron acceptor:

| | |
|---|---|
| Anode: [CH₂O] + H₂O | -> CO₂ + 4H⁺ + 4e⁻ (oxidation) |
| Cathode: 4H⁺ + 4e- | -> 2H₂ (reduction) |
| | |
| | |
| Nett: [CH₂O] + H₂O | -> CO₂ + 2H₂ |

The reaction at the anode may be performed by microorganisms, which can use the anode as electron acceptor. Examples of such microorganisms are *Geobacter sulferreducens, Shewanella putrefaciens, Geobacter metallireducens* and *Rhodoferax ferrireducens* or a consortium of these organisms. The anode compartment may at the beginning of the method according to the invention be inoculated with one or more microorganisms, that can use the anode as electron acceptor. However, this is not always necessary. Especially when a substrate is guided through the anode compartment of which the change is big that it comprises such microorganisms, such as active silt, inoculation may not be necessary.

The invention is further illustrated with the following figures and examples, which show non-limiting embodiments of the invention, and wherein:
Figure 1 shows a cross section through a biological fuel cell according to the invention;
Figure 2 shows a cross section through an alternative embodiment of the biological fuel cell according to the invention; and
Figure 3 shows a lengthways section of a biological fuel cell according to the invention in a modular housing;
Figure 4 shows a lengthways section through another alternative embodiment of the biological fuel cell according to the invention;
Figure 5 shows a lengthways section through the embodiment shown in figure 4A;

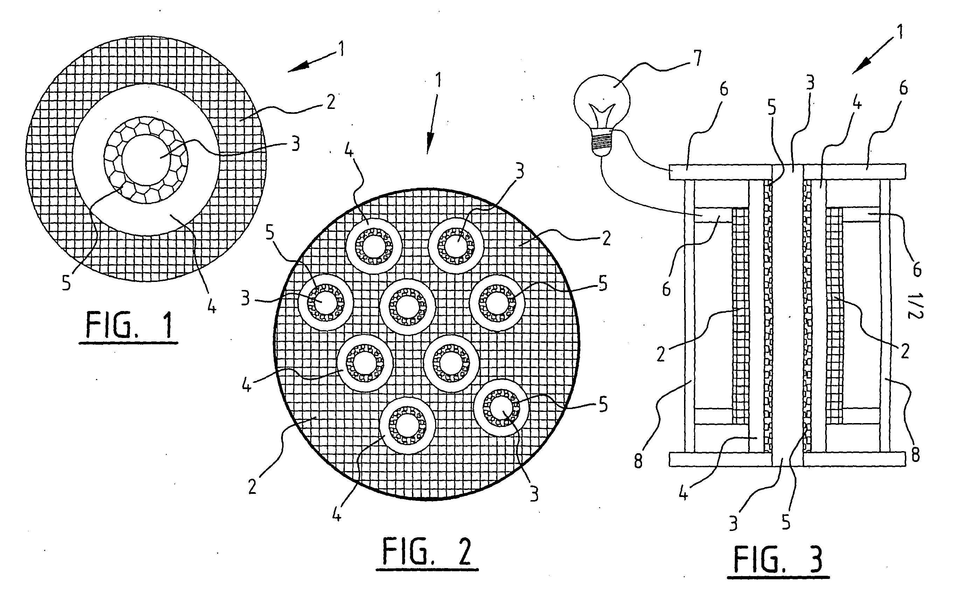

The in figure 1 presented biological fuel cell 1 comprises an anode compartment 2, enclosing a cathode compartment. Both the anode compartment and the cathode compartment have a circular cross section. The anode compartment and the cathode compartment are separated by a partition wall 4, formed by Nafion^{®}, which at the side of the cathode compartment is coated with a graphite layer 5, acting as cathode, and which is provided with a electron transfer catalyst, in this case a platinum material. The anode compartment is filled with a porous graphite felt 2, acting as anode 2, and whereon a consortium of *Geobacter sulferreducens, Shewanella putrefaciens, Geobacter metallireducens* and *Rhodoferax ferrireducens*, which use the anode 2 as an electron acceptor, grows. The anode compartment is fed with a waste water stream, comprising biologically oxidizable organic molecules. Through the open space 3 of the cathode compartment a gas stream is fed, comprising oxygen as electron acceptor. The anode 2 and cathode 5 are electrically connected (not shown) to allow electron transport from the anode 2 to the cathode 5.

In the in figure 2 presented biological fuel cell 1, a number of cathode compartments is enclosed by a single anode compartment. Each cathode compartment is herein separated from the anode compartment by means of the partition wall 4, constituted from Nafion^{®}, which is coated on the side of the cathode compartment with a graphite material acting as cathode 5, and which is furthermore provided with an electron transfer catalyst, made from a platinum material. Because of the scattering of the plurality of cathode compartments within the anode compartment, the distance for mass transport from the anode compartment to the cathode compartment 5 is small. The cathodes 5 in the cathode compartment are in mutual electrical contact (not shown) with the anode 2. Electrical current can be generated by flowing a waste water stream, comprising a biologically oxidizable organic compound, through the anode compartment by flowing a fluidum, comprising oxygen, through the cavity 3 of the cathode compartment.

Figure 3 shows a lengthways section of a biological fuel cell according to the present invention in a modular housing. Also in this embodiment a cathode compartment is enclosed by an anode compartment. The cathode- and anode compartments are again separated by a partition wall 4 constituted from Nafion^{®}, which at the side of the cathode compartment is coated with a cathode material 5, made from graphite powder, and which furthermore comprises finely divided platinum particles as electron transfer catalyst. The graphite felt 2 in the anode compartment is in contact with a conducting material 6. The same is true for the cathode 5. Via the conducting material 6 the anode 2 and cathode 5 are electrically connected with an electrical apparatus 7, in this case a lamp, which can convert the generated electrical energy. The whole is packed together in a modular housing 8.

Apart from connecting the anode 2 and the cathode 5 with an electrical apparatus, the biological fuel cell 1 according to the invention may also be connected in series with a number similar biological fuel cells 1, by connecting the anode 2 with the cathode 5 of a different biological fuel cell 1, and by the connecting the cathode 5 with the anode 2 of a different biological fuel cell 1. This increases the delivered voltage of the generated electrical current.

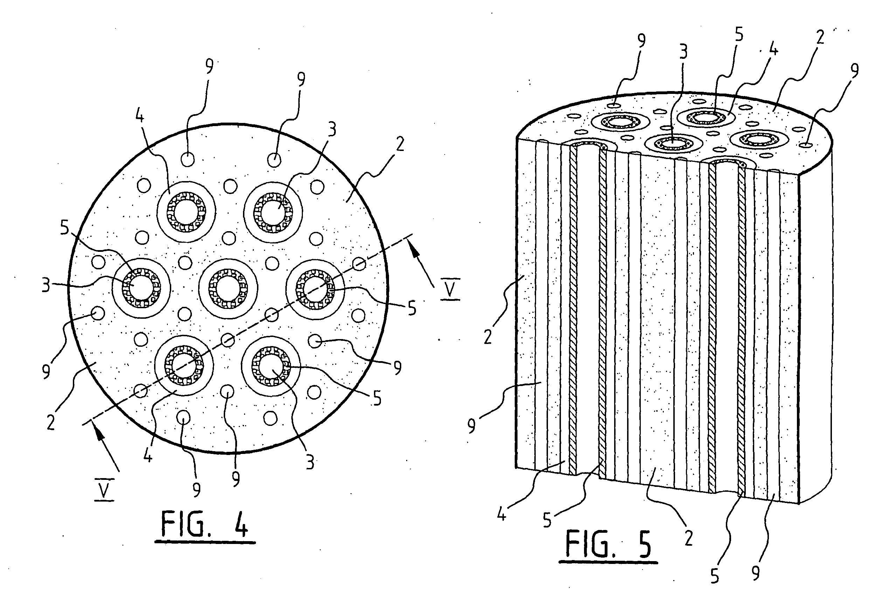

Figure 4 is an alternative embodiment of the biological fuel cell according to the invention. This embodiment is almost identical to the embodiment as presented in figure 2. Similar elements therefore have similar reference numbers. The embodiment of figure 4 only differs from that in figure 2 in the use of an alternative graphite felt 2 as anode 2 in the anode compartment and the presence of graphite rods 9 in the graphite felt 2, having a lower electrical resistance than the graphite felt 2. Due to the lower electrical resistance of the graphite rods 9, these can act as current conductor.

A lengthways section along the line V-V of figure 4 is presented in figure 5. In het lengthways section it is shown that in this embodiment according to the invention the current conductors 9 run along the length of the fuel cell. The current conductors 9 are electrically connected, via an electrical circuit (not shown) with the cathode 5.

### Example 1

A biological fuel cell is prepared from a carrier of a polypropylene hollow fibre membrane (accurel^{®}). The outer side of this fibre is coated with a solution comprising platinum particles, carbon and sulfonated polymer (SPEEK, sulfonated poly(ether ether ketone)) and a solvent (NMP, N-methyl-2-pyrrolidone). This coating, acting as cathode, is dried to evaporate the NMP solvent. Subsequently this cathode layer is coated 3 times with a SPEEK methanol solution (10 weight percent SPEEK). These coatings on the cathode layer act as cation selective partition wall. The degree of sulfonation of this sulfonated material is 75%. Thus, a defect free coating is obtained with a thickness of 0,1 mm. This membrane is fixed with the aid of polyurethane resin in a plastic module housing, wherein furthermore graphite felt is placed as anode. The electrical circuits of the anode and cathode are connected with the aid of copper wires, which are in connection with the graphite felt and the carbon layer on the membrane. The anodes, manufactures from graphite felt, are placed around the membrane in a anode compartment, which encloses the membranes. This biological fuel cell is inoculated with bacteria from an existing biological fuel cell. The anode compartment is completely filled with an aqueous fluid. The anode is fed with an acetate and glucose solution and anaerobic conditions are created by flushing the anode compartment with nitrogen. The cathode compartment is flushed with air. The biological fuel cell is capable of delivering electrical power.

### Example 2

A biological fuel cell is prepared by coating a PES (poly(ethersulfone)) hollow fibre membrane on the interior with a sulfonated polymer (SPEEK, sulfonation degree 75% dissolved in methanol, concentration SPEEK 5-10 weight percent). The coating is applied by letting the SPEEK solution flow through the inner cavity of the fibre with a pipette. This procedure is performed twice, in order to obtain a defect free coating. Subsequently this polymer coating, acting as cation selective partition wall, is platinized by cation exchange with a platinum solution and by reduction with tetrahydroborate. The method is described in: International Journal of Hydrogen Energy Volume 15, Issue 4, 1990, pages 245-253. Thus, a metallic platinum layer is obtained on the SPEEK layer on the interior of the membrane. This platinum layer acts as cathode and also has a function as catalyst. Subsequently a biological fuel cell is prepared in analogy to example 1. After inoculation of the anode compartment with a bacterial culture from an existing biological fuel cell, the anode compartment is fed with an acetate and glucose solution. Anaerobic conditions are maintained in the anode compartment by flushing the compartment with nitrogen. The cathode compartment is flushed with air. This biological fuel cell is capable of delivering electrical power.

## Claims

1. Biological fuel cell (1) comprising:
- a number of cathode compartments provided with a cathode (5);
- a number of anode compartments (2) provided with an anode (2); and
- a partition wall (4) separating the cathode and the anode compartments, wherein the compartments are present as enclosed compartments and the enclosed compartments at least partially enclosing compartments,
**characterized in that** a single enclosing compartment encloses a plurality of enclosed compartments.

2. Biological fuel cell according to claim 1, wherein a number of anode compartments enclose a number of cathode compartments.

3. Biological fuel cell according to claim 1, wherein a number of cathode compartments enclose a number of anode compartments.

4. Biological fuel cell according to one of the claims 1-3, wherein at least one of the number of cathode compartments or the number of anode compartments has an essentially circular cross section.

5. Biological fuel cell according to one of the previous claims, wherein the enclosed compartments are electrically connected, for example by means of an electrically conducting plastic.

6. Biological fuel cell according to one of the previous claims, wherein the partition wall comprises a selective permeable material, for example an ion permeable material, such as a cation permeable material, including a proton permeable material, such as Nafion^{®}.

7. Biological fuel cell according to one of the previous claims, wherein the biological fuel cell is switched in series with a number of differing biological fuel cells, wherein the anode is electrically connected with the cathode of a different biological fuel cell, and the cathode is electrically connected with the anode of a different biological fuel cell.

8. Biological fuel cell according to one of the previous claims, wherein at least one of the anode or cathode comprises at least two materials with mutually differing electrical resistance.

9. Method for the biological oxidation of a biologically oxidisible compound, comprising the steps of:
- (I) providing a biological fuel cell(1) according to one of the claims 1-8;
- (II) electrically connecting the anode(2) and the cathode(5);
- (III) providing a biologically oxidisable compound to the number of anode compartments;
- (IV) providing a reducible compound to the number of cathode compartments;
- (V) forming and/or maintaining anaerobic conditions in the number of anode compartments;
- (VI) optionally inoculating the number of anode compartments with a number of micro-organisms that may use the anode as an electron acceptor.

10. Method according to claim 9, wherein the biologically oxidisable compound is an organic compound.

11. Method according to any of the claims 9-10, wherein the reducible compound is selected from the group comprising O₂ or H⁺.

12. Method according to any of the claims 9-11, wherein micro-organisms are selected from the group comprising *Shewanella putrefaciens, Geobacer metallireducens* and Thodoferax ferrireducens.

## Patentansprüche

1. Biologische Brennstoffzelle (1) mit:
- einer Anzahl an Kathodenabteilen, die mit einer Kathode (5) versehen sind;
- einer Anzahl an Anodenabteilen (2), die mit einer Anode (2) versehen sind; und
- einer Trennwand (4), die die Kathoden- und die Anodenabteile trennt, wobei die Abteile als umschlossene Abteile vorhanden sind und die umschlossenen Abteile zumindest teilweise Abteile umschließen,
**dadurch gekennzeichnet, dass** ein einziges umschließendes Abteil eine Vielzahl an umschlossenen Abteilen umschließt.

2. Biologische Brennstoffzelle gemäß Anspruch 1, wobei eine Anzahl an Anodenabteilen eine Anzahl an Kathodenabteilen umschließt.

3. Biologische Brennstoffzelle gemäß Anspruch 1, wobei eine Anzahl an Kathodenabteilen eine Anzahl an Anodenabteilen umschließt.

4. Biologische Brennstoffzelle gemäß einem der Ansprüche 1 - 3, wobei zumindest eine aus der Anzahl der Kathodenabteile oder der Anzahl der Anodenabteile einen im Wesentlichen runden Querschnitt hat.

5. Biologische Brennstoffzelle gemäß einem der vorherigen Ansprüche, wobei die umschlossenen Abteile elektrisch verbunden sind, zum Beispiel mittels eines elektrisch leitenden Kunststoffs.

6. Biologische Brennstoffzelle gemäß einem der vorherigen Ansprüche, wobei die Trennwand ein selektiv durchlässiges Material aufweist, zum Beispiel ein Ionen durchlässiges Material wie zum Beispiel ein Kationen durchlässiges Material einschließlich eines Protonen durchlässigen Materials wie zum Beispiel Nafion®.

7. Biologische Brennstoffzelle gemäß einem der vorherigen Ansprüche, wobei die biologische Brennstoffzelle mit einer Anzahl an unterschiedlichen biologischen Brennstoffzellen in Reihe geschaltet ist, wobei die Anode mit der Kathode einer unterschiedlichen biologischen Brennstoffzelle elektrisch verbunden ist, und die Kathode mit der Anode einer unterschiedlichen biologischen Brennstoffzelle elektrisch verbunden ist.

8. Biologische Brennstoffzelle gemäß einem der vorherigen Ansprüche, wobei zumindest eine von der Anode oder der Kathode zumindest zwei Materialien mit voneinander unterschiedlichem elektrischem Widerstand aufweist.

9. Verfahren für die biologische Oxidation einer biologisch oxidierbaren Zusammensetzung, mit den folgenden Schritten:
- (I) Vorsehen einer biologischen Brennstoffzelle (1) gemäß einem der Ansprüche 1 - 8;
- (II) elektrisches Verbinden der Anode (2) und der Kathode (5);
- (III) Vorsehen einer biologisch oxidierbaren Zusammensetzung für die Anzahl an Anodenabteilen;
- (IV) Vorsehen einer reduzierbaren Zusammensetzung für die Anzahl an Kathodenabteilen;
- (V) Ausbilden und/oder Aufrechterhalten von anaerobischen Bedingungen bei der Anzahl an Anodenabteilen;
- (VI) optionales Impfen der Anzahl an Anodenabteilen mit einer Anzahl an Mikroorganismen, die die Anode als einen Elektronenakzeptor nutzen können.

10. Verfahren gemäß Anspruch 9, wobei die biologisch oxidierbare Zusammensetzung eine organische Zusammensetzung ist.

11. Verfahren gemäß einem der Ansprüche 9 - 10, wobei die reduzierbare Zusammensetzung aus jener Gruppe ausgewählt wird, die O₂ oder H⁺ aufweist.

12. Verfahren gemäß einem der Ansprüche 9 - 11, wobei die Mikroorganismen aus jener Gruppe ausgewählt werden, die Shewanella putrefaciens, Geobacer metallireducens und Thodoferax ferrireducens aufweist.

## Revendications

1. Pile à combustible biologique (1) comprenant :
- un certain nombre de compartiments de cathode pourvus d'une cathode (5) ;
- un certain nombre de compartiments d'anode (2) pourvus d'une anode (2) ; et
- une paroi de séparation (4) séparant les compartiments de cathode et d'anode, dans laquelle les compartiments sont présents en tant que compartiments fermés et les compartiments fermés entourent au moins partiellement des compartiments,
**caractérisée en ce qu'**un seul compartiment enveloppant entoure une pluralité de compartiments fermés.

2. Pile à combustible biologique selon la revendication 1, dans laquelle un certain nombre de compartiments d'anode entourent un certain nombre de compartiments de cathode.

3. Pile à combustible biologique selon la revendication 1, dans laquelle un certain nombre de compartiments de cathode entourent un certain nombre de compartiments d'anode.

4. Pile à combustible biologique selon l'une des revendications 1 à 3, dans laquelle au moins l'un du certain nombre de compartiments de cathode ou du certain nombre de compartiments d'anode a une section essentiellement circulaire.

5. Pile à combustible biologique selon l'une des revendications précédentes, dans laquelle les compartiments fermés sont connectés électriquement, par exemple au moyen d'une matière plastique électriquement conductrice.

6. Pile à combustible biologique selon l'une des revendications précédentes, dans laquelle la paroi de séparation comprend un matériau perméable sélectif, par exemple un matériau perméable aux ions, tel qu'un matériau perméable aux cations, comprenant un matériau perméable aux protons, tel que le Nafion®.

7. Pile à combustible biologique selon l'une des revendications précédentes, dans laquelle la pile à combustible biologique est commutée en série avec un certain nombre de piles à combustible biologiques différentes, dans laquelle l'anode est connectée électriquement à la cathode d'une pile à combustible biologique différente, et la cathode est connectée électriquement à l'anode d'une pile à combustible biologique différente.

8. Pile à combustible biologique selon l'une des revendications précédentes, dans laquelle au moins l'une de l'anode ou de la cathode comprend au moins deux matériaux avec des résistances électriques mutuellement différentes.

9. Procédé d'oxydation biologique d'un composé pouvant être oxydé biologiquement, comprenant les étapes consistant à :
- (I) fournir une pile à combustible biologique (1) selon l'une des revendications 1 à 8 ;
- (II) connecter électriquement l'anode (2) et la cathode (5) ;
- (III) fournir un composé pouvant être oxydé biologiquement au certain nombre de compartiments d'anode ;
- (IV) fournir un composé réductible au certain nombre de compartiments de cathode ;
- (V) former et/ou maintenir des conditions anaérobiques dans le certain nombre de compartiments d'anode ;
- (VI) inoculer, optionnellement, dans le certain nombre de compartiments d'anode, un certain nombre de micro-organismes qui peuvent utiliser l'anode en tant qu'accepteur d'électrons.

10. Procédé selon la revendication 9, dans lequel le composé pouvant être oxydé biologiquement est un composé organique.

11. Procédé selon l'une quelconque des revendications 9 et 10, dans lequel le composé réductible est sélectionné dans le groupe comprenant du O₂ ou du H⁺.

12. Procédé selon l'une quelconque des revendications 9 à 11, dans lequel les micro-organismes sont sélectionnés dans le groupe comprenant du *Shewanella putrefaciens,* du *Geobacer metallireducens* et du *Thodoferax ferrireducens.*
